# EUROPEAN PATENT APPLICATION

(11) **EP 4 765 999 A1**
(43) Date of publication of application: **24.06.2026**
(21) Application number: 24865909.6
(22) Date of filing: 13.09.2024
(51) Int. Cl.: H04W 74/00, H04B 7/024, H04L 5/00, H04W 84/12, H04W 74/04, H04W 52/02, H04W 74/0816

(54) **METHOD AND APPARATUS FOR JOINT COMMUNICATION OF MULTIPLE APS IN WIRELESS LAN SYSTEM**

(30) Priority: 15.09.2023 KR 20230123137; 17.01.2024 KR 20240007367
(71) Applicant: Hyundai Motor Company, Seoul 06797 (KR); Kia Corporation, Seoul 06797 (KR); KOREA NATIONAL UNIVERSITY OF TRANSPORTATION INDUSTRY-ACADEMIC COOPERATION FOUNDATION, Chungju-si, Chungcheongbuk-do 27469 (KR)
(72) Inventor: KIM, Yong Ho, Incheon 22003 (KR); AHN, Woo Jin, Anyang-si Gyeonggi-do 14038 (KR); MOON, Ju Seong, Osan-si Gyeonggi-do 18101 (KR)
(74) Representative: Isarpatent
(86) International application number: PCT/KR2024/014015
(87) International publication number: WO 2025/058470

(57) **Abstract**

For cooperative communication of multiple APs in a wireless LAN system, a method for operating an access point (AP) may comprise negotiating with at least one other AP for joint transmission, transmitting information for the joint transmission based on a result of negotiation and transmitting a frame based on the result of negotiation. The result of negotiation includes a frequency for the joint transmission, and the frame is transmitted using the frequency for the joint transmission.

## Description

### Technical Field

The present invention relates to a wireless local area network (WLAN) system, and more particularly, to a method and apparatus for joint communication of multiple access points (APs) in a wireless local area network (LAN) system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

Standards for wireless LAN technology are primarily being developed to the IEEE 802.11 standard by the Institute of Electrical and Electronics Engineers (IEEE). As the aforementioned wireless LAN technology has developed and become widespread, applications utilizing it have diversified, creating a demand for wireless LAN technology that supports higher reliability.

As applications requiring higher reliability emerge, the IEEE 802.1lbn standard, which is an Ultra High Reliability (UHR) wireless LAN technology, is being developed in single Basic Service Set (BSS) and/or redundant BSS environments. The goals of the IEEE 802.1 lbn standard are to support increased data transmission rates, improved latency performance, and lower data error rates. Furthermore, the IEEE 802.1 1bn standard can support low-power operation and peer-to-peer communication.

In a wireless LAN, there may be a need for a method for multiple access points (APs) to perform cooperative communication. Multiple APs may establish a cooperative communication schedule and change operating frequencies to perform cooperative communication. However, if APs operate in a state of changing the operating frequencies, communication between WLAN terminals connected to the APs may become impossible, thereby reducing communication efficiency and increasing latency. That is, the reliability of the WLAN network is satisfied.

Meanwhile, the technologies that are described in the Background period are written to improve the understanding of the background of the present disclosure and may include content that is not already known to those of ordinary skill in the art to which the present disclosure belongs.

### Disclosure

### Technical Problem

The present disclosure provides a method and apparatus for multiple access points (APs) to perform joint transmission in a wireless LAN system.

The present disclosure provides a method and apparatus for multiple APs to perform negotiation to perform joint transmission in a wireless LAN system.

The present disclosure provides a method and apparatus for multiple APs to performing scheduling to perform joint transmission in a wireless LAN system.

The present disclosure provides a method and apparatus for setting a transmission prohibition period for STAs (stations) that do not participate in joint transmission in a wireless LAN system.

The present disclosure provides a method and apparatus for enabling STAs that do not participate in joint transmission to communicate directly with each other in a wireless LAN system.

The present disclosure provides a method and apparatus for performing media synchronization after joint transmission is terminated in a wireless LAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

A method for operating an access point (AP) in a wireless LAN system may comprise negotiating with at least one other AP for joint transmission, transmitting information for joint transmission based on a result of negotiation, and transmitting a frame based on the result of negotiation. The result of negotiation includes a frequency for the joint transmission, and the frame is transmitted using the frequency for the joint transmission.

A method for operating a station (STA) in a wireless LAN system may comprise receiving information for joint transmission from a connected AP and performing at least one of a transmission prohibition operation, a frame reception operation, or a direct communication operation during a period of the joint transmission based on the information for joint transmission. The information for joint transmission includes at least one of information about the period of the joint transmission or information about a frequency for the joint transmission.

An access point (AP) in a wireless LAN system may comprise a transceiver and a processor connected to the transceiver. The processor may be configured to negotiate with at least one other AP for joint transmission, transmit information for joint transmission based on a result of negotiation, and transmit a frame based on the result of negotiation. The result of negotiation includes a frequency for the joint transmission, and the frame is transmitted using the frequency for the joint transmission.

A station (STA) in a wireless LAN system may comprise a transceiver and a processor connected to the transceiver. The processor may be configured to receive information for joint transmission from a connected AP, and perform at least one of a transmission prohibition operation, a frame reception operation, or a direct communication operation during a period of the joint transmission based on the information for joint transmission. The information for joint transmission includes at least one of information about the period of the joint transmission or information about a frequency for the joint transmission.

### Advantageous Effects

According to the present disclosure, scheduling for cooperative communication can be performed at a specific frequency.

According to the present disclosure, direct communication periods can be established for stations (STAs) which are wireless LAN terminals connected to access points (APs).

According to the present disclosure, STAs can perform direct communication even when communication with APs is impossible, thereby increasing transmission efficiency.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of a communication node constituting a WLAN system.
FIG. 2 illustrates a first embodiment of a multi-AP joint transmission method.
FIG. 3 illustrates a second embodiment of a multi-AP joint transmission method.
FIG. 4 illustrates a third embodiment of a multi-AP joint transmission method.
FIG. 5 illustrates a first embodiment of a multi-AP frequency change communication method.
FIG. 6 is a flowchart of a negotiation and communication procedure for joint transmission according to an embodiment of the present disclosure.
FIG. 7 is a flowchart of a communication procedure for joint transmission according to an embodiment of the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, preferred embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

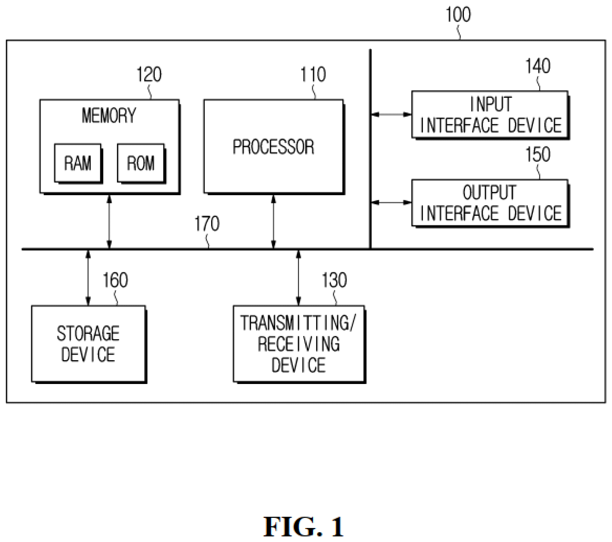

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

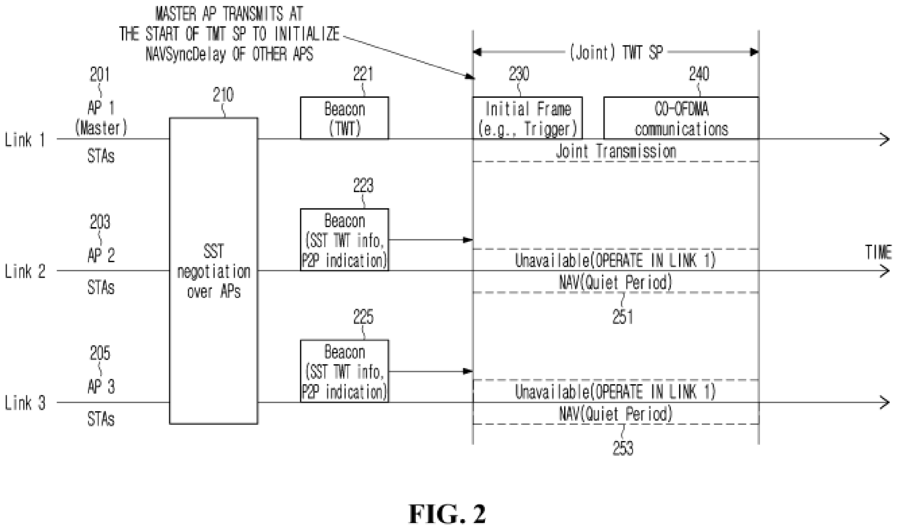

FIG. 2 illustrates a first embodiment of a multi-AP joint transmission method.

Referring to FIG. 2, AP 1 201 operates in a first link, AP 2 203 operates in a second link, and AP 3 205 operates in a third link. Here, 'link' may refer to a specific operating frequency of a wireless LAN network. The operating frequencies of the first link to the third link may be different from each other or may be the same. When the operating frequencies of AP 1 201 to AP 3 205 are the same, an OBSS (overlapping basic service set) of AP 1 201 is BSSs (basic service sets) of AP 2 203 and AP 3 205, an OBSS of AP 2 203 is the BSSs of AP 1 201 and AP 3 205, and an OBSS of AP 3 205 is the BSSs of AP 1 201 and AP 2 203. AP 1 201 to AP 3 205 may synchronize TSF (time synchronization function) with each other. That is, AP 1 201 to AP 3 205 have the same TSF value at the same time. The synchronization of TSF may be for synchronizing the joint transmission schedules (e.g., R-TWT (restricted target wake time) SP) of AP 1 201 to AP 3 205 with each other. In addition, when the operating frequencies of AP 1 201 to AP 3 205 are the same, synchronizing the TSF may be for synchronizing the joint transmission schedules (e.g., R-TWT SP) of the OBSSs with each other. AP 1 201 to AP 3 205 may perform schedule negotiation 210 for joint transmission. The schedule negotiation 210 for joint transmission may be a subchannel selective transmission (SST) target wake time (TWT) negotiation, a TWT negotiation of another type other than SST, or a transmission period negotiation. The SST TWT negotiation is a negotiation that establishes that communication will proceed on another channel during the TWT period. The SST TWT negotiation may be a negotiation that establishes, for example, that AP 2 203 operating in the second link and AP 3 205 operating in the third link operate in the first link within the TWT SP. As a result of the schedule negotiation 210 for joint transmission, AP 1 201 to AP 3 205 may establish a joint transmission period. The joint transmission period may be a TWT service period (SP). AP 1 201 may be a master AP leading joint transmission schedule negotiation 210, and AP 1 201 to AP 3 205 perform communication at the operating frequency (i.e., the first link or the first channel) of AP 1 201 within the joint transmission period. That is, AP 2 203 and AP 3 205 must change the operating frequency (i.e., the link or the channel). Since AP 1 201 to AP 3 205 have synchronized the TSF, the starting points of the joint transmission periods of AP 1 201 to AP 3 205 may be the same, and AP 1 201 to AP 3 205 may know exactly when the joint transmission period starts.

AP 1 201 to AP 3 205 may transmit frames 221, 223 and 225 indicating a joint transmission period before the start of the joint transmission period. The frames 221, 223 and 225 indicating the joint transmission period may be frames in various forms. For example, the frames 221, 223 and 225 indicating the joint transmission period may be beacon frames. The frames 221, 223 and 225 indicating the joint transmission period may include information indicating the joint transmission period (e.g., TWT information, TWT element) and information indicating a frequency (e.g., link ID, channel number, information that may indicate a specific operating frequency). The frames 223 and 225 indicating the joint transmission period transmitted by AP 2 203 and AP 3 205 may further include information indicating that transmission of STAs connected to AP 2 203 and AP 3 205 is prohibited within the joint transmission period (e.g., information indicating a period in which transmission is prohibited, quiet element). Alternatively, the information indicating that transmission is prohibited in the joint transmission period may be included together with the information indicating the joint transmission period (e.g., TWT information, TWT element). The information indicating that transmission is prohibited indicates a transmission prohibition period, which indicates a period in which the AP is unavailable, during which transmission from the STA to the AP is prohibited. The frame indicating the joint transmission period may include TWT information (e.g., information indicating an R-TWT SP) indicating that transmission must be terminated (e.g., TXOP (transmit opportunity) must be terminated) before the joint transmission period (e.g., TWT SP, R-TWT SP, SP). That is, information indicating the joint transmission period and frequency may indicate the R-TWT SP. The channel switching delay, which is the time it takes for an AP to change to a frequency that uses the joint transmission, may be included in the transmission prohibition period. The channel switching delay may be applied to both a point in time when changing from the operating frequency to the frequency for joint transmission and a point in time when changing from the frequency for joint transmission to the current operating frequency. The channel switching delay may differ between APs. APs may perform multi-AP joint transmission from the same point in time after the channel switching delay. If the channel switching delays of the APs are different, the length of the transmission prohibition period may be different. For example, if the channel switching delay of AP 2 203 is longer than that of AP 1 201 and the channel switching delay of AP 3 205 is longer than that of AP 2 203, then considering the channel switching delays of the APs, the length of the transmission prohibition period of AP 3 205 may be the longest, the length of the transmission prohibition period of AP 1 201 may be the shortest, and the length of the transmission prohibition period of AP 2 203 may be longer than the length of the transmission prohibition period of AP 1 201 and shorter than the length of the transmission prohibition period of AP 3 205. For example, the channel switching delay may be a predetermined value known to all STAs in the BSS. Alternatively, the AP may not include the channel switching delay in the transmission prohibition period. STAs may receive a frame indicating a joint transmission period, and may calculate and recognize that the AP is unavailable from a time before the channel switching delay of the AP from the indicated time when receiving a transmission prohibition indication included in the frames 223 and 225 indicating the joint transmission period. STAs do not perform transmission to the AP from the calculated time. STAs may terminate transmission (e.g., terminate TXOP) before the start of the transmission prohibition period when receiving the frame indicating the joint transmission period. When the operating frequencies of AP 1 201 to AP 3 205 are the same, and STAs receive the frames 223 and 225 indicating the joint transmission period of the OBSS (i.e., AP 2 203 and AP 3 205 when the STA is connected to AP 1 201, AP 1 201 and AP 3 205 when the STA is connected to AP 2 203, and AP 1 201 and AP 2 203 when the STA is connected to AP 3 205), transmission may be terminated before the start of the transmission prohibition period included in the frames 223 and 225 indicating the joint transmission periods of the OBSSs. The frames 223 and 225 indicating the joint transmission periods transmitted by AP 2 203 and AP 3 205 may further include information (e.g., link ID, channel number, information capable of indicating a specific operating frequency) indicating an operating frequency to STAs that want to participate in the joint transmission period among STAs connected to AP 2 203 and AP 3 205. At the start of the joint transmission period, AP 2 203 and AP 3 205 may operate at the frequency indicating the joint transmission, for example, in the first link, and AP 1 201 to AP 3 205 perform cooperative communication using the frequency at which the joint transmission is performed. STAs that want to participate in the joint transmission period among STAs connected to AP 2 203 and AP 3 205 may operate at the frequency in which the joint transmission is performed, for example, in the first link, at the start of the joint transmission period. STAs wanting to participate in the joint transmission period may need to perform a negotiation procedure with AP 2 203 and AP 3 205, and the negotiation procedure may be a TWT negotiation (e.g., broadcast TWT negotiation, individual TWT negotiation) procedure. Among STAs connected to AP 2 203 and AP 3 205, STAs that do not participate in the joint transmission period do not transmit frames to the corresponding APs within the joint transmission period by information indicating that transmission transmitted by AP 2 203 and AP 3 205 is prohibited. For example, STAs that do not participate in the joint transmission period may consider that there is no data (e.g., data packets, MSDUs, MPDUs) destined for AP 2 203 and AP 3 205. The operation of the STAs not transmitting frames within the joint transmission period may be due to NAV (network allocation vector) 251 and 253. For example, STAs connected to AP 2 203 and AP 3 205 may set NAV 251 and 253 by the length of the joint transmission period according to information indicating that transmission is prohibited, and do not perform frame transmission by considering the channel as busy during the set NAV 251 and 253. Since AP 2 203 and AP 3 205 operate at an operating frequency (e.g., in the first link) different from the original operating frequency within the joint transmission period and do not perform a reception operation (i.e., a reception operation including a channel detection operation (e.g., a clear channel assessment (CCA))) at the different operating frequency before the joint transmission period, medium synchronization may be lost. In addition, if the joint transmission period is longer than a specific length, changing to the original operating frequency after the joint transmission period may result in loss of medium synchronization. Therefore, AP 2 203 and AP 3 205 must set a MediumSyncDelay timer, which is a timer for restoring medium synchronization, immediately after starting operation in the frequency for joint transmission (e.g., the first link) at the start time of the joint transmission period, and frame transmission may be restricted while the MediumSyncDelay timer is operating. Restricting frame transmission while the MediumSyncDelay timer is operating may mean that, before transmitting a data frame, if the channel energy is below a certain level, an RTS frame must be transmitted or a CCA (clear channel assessment) operation is performed without transmitting the frame. The MediumSyncDelay timer is released when the frame is normally received (e.g., the MPDU is normally received without error) and successfully decoded. AP 1 201 does not change the operating frequency and may immediately transmit the frame within the joint transmission period. Accordingly, AP 1 201 may transmit an 'initial frame' (e.g., trigger frame 230) to release the MediumSyncDelay timer of AP 2 203 and AP 3 205 at the starting point of the joint transmission period and to restore medium synchronization. The initial frame includes not only the trigger frame but also all kinds of frames that AP 2 203 and AP 3 205 may decode and set the NAV correctly. Within the joint transmission frequency, i.e., the joint transmission period of the first link, AP 1 201 to AP 3 205 perform joint transmission. For example, AP 1 201 to AP 3 205 may transmit a frame 240 to STAs in the first link by performing a CO-OFDMA (coordinated orthogonal frequency division multiple access) operation or a CO-SR (coordinated spatial reuse) operation. At the end point of the joint transmission period, AP 2 203 and AP 3 205 operate again in the second link and the third link.

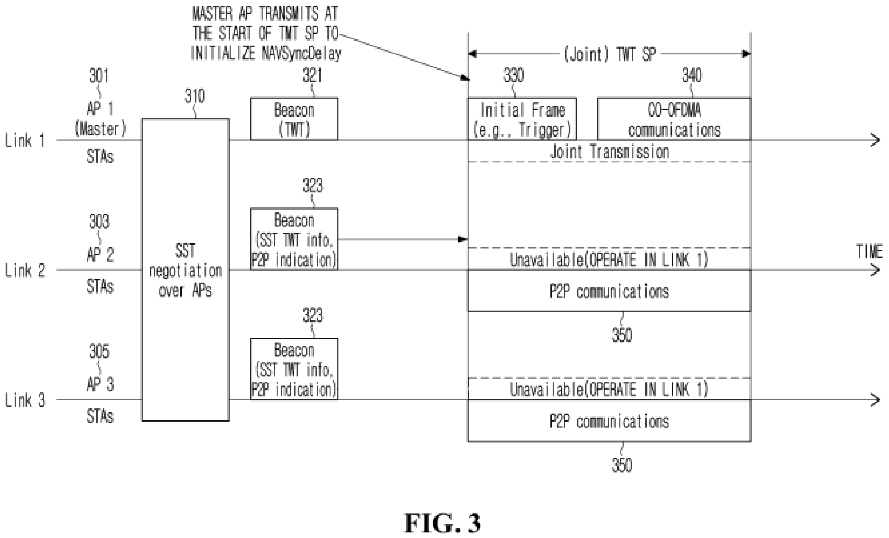

FIG. 3 illustrates a second embodiment of a multi-AP joint transmission method.

Referring to FIG. 3, AP 1 301 operates in a first link, AP 2 303 operates in a second link, and AP 3 305 operates in a third link. Here, the link may refer to a specific operating frequency of a wireless LAN network. The operating frequencies of the first link to the third link may be different from each other or may be the same. When the operating frequencies of AP 1 301 to AP 3 305 are the same, an OBSS of AP 1 301 is BSSs of AP 2 303 and AP 3 305, an OBSS of AP 2 303 is BSSs of AP 1 301 and AP 3 305, and an OBSS of AP 3 305 is BSSs of AP 1 301 and AP 2 303. AP 1 301 to AP 3 305 may synchronize TSF (time synchronization function) with each other. That is, AP 1 301 to AP 3 303 have the same TSF value at the same time. The synchronization of TSF may be for synchronizing joint transmission schedules (e.g., R-TWT SP) of AP 1 301 to AP 3 305 with each other. In addition, when the operating frequencies of AP 1 301 to AP 3 305 are the same, synchronizing TSF may be for synchronizing joint transmission schedules (e.g., R-TWT SP) of OBSS with each other. AP 1 301 to AP 3 305 may perform schedule negotiation 310 for joint transmission. Schedule negotiation 310 for joint transmission may be SST (subchannel selective transmission) TWT (target wake time) negotiation, another type of TWT negotiation other than SST, or transmission period negotiation. The SST TWT negotiation is a negotiation that establishes that communication will proceed on another channel during the TWT period. The SST TWT negotiation may be a negotiation that establishes, for example, that AP 2 303 operating in the second link and AP 3 305 operating in the third link operate in the first link within the TWT SP. As a result of the schedule negotiation 310 for the joint transmission, AP 1 301 to AP 3 305 may establish a joint transmission period. The joint transmission period may be a TWT SP (service period). AP 1 301 may be a master AP that leads the joint transmission schedule negotiation 310. AP 1 301 to AP 3 305 perform communication at the operating frequency of AP 1 301 (i.e., the first link or the first channel) within the joint transmission period. That is, AP 2 303 and AP 3 305 must change the operating frequency (i.e., link or channel). Since AP 1 301 to AP 3 305 have synchronized the TSF, the start points of the joint transmission periods of AP 1 301 to AP 3 305 may be the same, and AP 1 301 to AP 3 305 may know exactly when the joint transmission period starts.

AP 1 301 to AP 3 305 may transmit frames 321, 323 and 325 indicating a joint transmission period before the start of the joint transmission period. The frames 321, 323 and 325 indicating the joint transmission period may be frames in various forms, for example, may be beacon frames. The frames 321, 323 and 325 indicating the joint transmission period may include information indicating the joint transmission period (e.g., TWT information, TWT element) and information indicating a frequency (e.g., link ID, channel number, information that may indicate a specific operating frequency). The frames 323 and 325 indicating the joint transmission period transmitted by AP 2 303 and AP 3 305 may further include information (e.g., information on the period in which direct communication may be performed, information on STAs that may participate in direct communication) indicating that STAs connected to AP 2 303 and AP 3 305 perform direct communication (e.g., operation of performing communication between STAs without going through the AP) 350 within the joint transmission period. In the present embodiment, the information indicating that the performance of the direct communication 350 is referred to as a direct communication indication. The direct communication indication may be included together with the information indicating the joint transmission period (i.e., TWT element, TWT information). The direct communication indication indicates that the AP performs direct communication 350 within the unavailable period, during which transmission from the STA to the AP is prohibited. The frames 321, 323 and 325 indicating the joint transmission period may include TWT information (e.g., information indicating R-TWT SP) in which transmission must be terminated (e.g., TXOP (transmit opportunity) must be terminated ) prior to the joint transmission period (e.g., TWT SP, R-TWT SP, SP). That is, the information indicating the joint transmission period and frequency may indicate R-TWT SP. The period during which direct communication is performed within the period in which the AP is unavailable may be referred to as a direct communication period. A channel switching delay, which is the time it takes for the AP to change to a frequency that uses the joint transmission, may be included in the direct communication period. The channel switching delay may be applied to both a point in time when changing from an operating frequency to a frequency for joint transmission and a point in time when changing from a frequency for joint transmission to the current operating frequency. The channel switching delay may differ between APs, and the APs may perform multi-AP joint transmission from the same point in time after the channel switching delay. If the channel switching delays of APs are different, the length of the transmission prohibition period may be different. For example, if the channel switching delay of AP 2 303 is longer than that of AP 1 301, and the channel switching delay of AP 3 305 is longer than that of AP 2 303, then considering the channel switching delays of the APs, the length of the transmission prohibition period of AP 3 305 may be the longest, the length of the transmission prohibition period of AP 1 301 may be the shortest, and the length of the transmission prohibition period of AP 2 303 may be longer than that of AP 1 301 but shorter than that of AP 3 305. The channel switching delay may be a predetermined value known to all STAs in the BSS. Alternatively, the AP may not include the channel switching delay in the direct communication period. STAs may receive frames 323 and 325 indicating a joint transmission period, and may calculate and recognizethat the AP is unavailable from a time before the channel switching delay of the AP from the indicated time when receiving a direct communication indication included in the frame indicating the joint transmission period. STAs do not perform transmission to the AP from the calculated time. STAs may terminate transmission (e.g., terminate TXOP) before the start of the transmission prohibition period when receiving frames 321, 323 and 325 indicating the joint transmission period. When the operating frequencies of AP 1 301 to AP 3 305 are the same and STAs receive the frames 323 and 325 indicating the joint transmission period of the OBSS (i.e., AP 2 303 and AP 3 305 when the STA is connected to AP 1 301, AP 1 301 and AP 3 305 when the STA is connected to AP 2 303, and AP 1 301 and AP 2 303 when the STA is connected to AP 3 305), transmission may be terminated before the start of the direct communication period included in the frames 323 and 325 indicating the joint transmission period of the OBSS. Additionally, frames 323 and 325 indicating joint transmission periods transmitted from AP 2 303 and AP 3 305 may further include an indicator (e.g., information indicating a period in which transmission is prohibited, a quiet element) indicating that transmission is prohibited during the period in which the AP is unavailable. The indicator indicating that transmission is prohibited during the period in which the AP is unavailable is information indicating that STAs set a NAV during the period in which the AP is unavailable. Within the period in which the AP is unavailable, STAs that recognize the direct communication indication and want to perform direct communication 350 may ignore the indicator indicating that transmission is prohibited (e.g., without setting a NAV) and perform direct communication 350 (e.g., perform a channel access operation, perform frame transmission). STAs that do not perform direct communication 350 or do not recognize a direct communication indication set a NAV during the period in which the AP is unavailable due to the transmission prohibition indicator, and do not perform a channel access operation or a frame transmission operation. Within the period in which the AP is unavailable, STAs perform direct communication 350, which is communication that does not go through the AP. The frames 323 and 325 indicating the joint transmission period transmitted by AP 2 303 and AP 3 305 may further include information (e.g., link ID, channel number, information that may indicate a specific operating frequency) that indicates an operating frequency to STAs that want to participate in the joint transmission period among STAs connected to AP 2 303 and AP 3 305. At the start of the joint transmission period, AP 2 303 and AP 3 305 may operate in the first link, and AP 1 301 to AP 3 305 perform cooperative communication. Among the STAs connected to AP 2 303 and AP 3 305, STAs that want to participate in the joint transmission period may operate at the frequency that indicates the joint transmission, for example, in the first link, at the start of the joint transmission period. STAs that want to participate in the joint transmission period may need to perform a negotiation procedure with AP 2 303 and AP 3 305, and the negotiation procedure may be a TWT negotiation procedure (e.g., broadcast TWT negotiation, individual TWT negotiation). Among the STAs connected to AP 2 303 and AP 3 305, STAs that do not participate in the joint transmission period perform communication (e.g., direct communication, peer-to-peer communication) between STAs using the original operating frequency within the joint transmission period by information indicating performance of direct communication 350 transmitted by AP 2 303 and AP 3 305. STAs that do not participate in the joint transmission period do not transmit frames to AP 2 303 and AP 3 305 within the joint transmission period. STAs that do not participate in the joint transmission period must select a new backoff counter (e.g., EDCA backoff counter) when the joint transmission period and direct communication period are terminated. STAs that do not participate in the joint transmission period may consider that there is no data (e.g., data packet, MSDU, MPDU) destined for AP 2 303 and AP 3 305 in the queue during the joint transmission period. Since AP 2 303 and AP 3 305 operate at an operating frequency (e.g., in the first link) different from the original operating frequency within the joint transmission period and do not perform a reception operation (i.e., a reception operation including a channel detection operation (e.g., a clear channel assessment (CCA))) at the different operating frequency before the joint transmission period, medium synchronization may be lost. In addition, if the joint transmission period is longer than a specific length, changing to the original operating frequency after the joint transmission period may result in loss of medium synchronization. Therefore, AP 2 203 and AP 3 305 must set a MediumSyncDelay timer, which is a timer for restoring medium synchronization, immediately after starting operation in the frequency for joint transmission (e.g., the first link) at the start time of the joint transmission period, and frame transmission may be restricted while the MediumSyncDelay timer is operating. Restricting frame transmission while the MediumSyncDelay timer is operating may mean that an RTS frame must be transmitted before transmitting a frame, or that a clear channel assessment (CCA) operation must be performed without transmitting a frame. The MediumSyncDelay timer is released when a frame is normally received (e.g., the MPDU is normally received without error) and successfully decoded. AP 1 301 does not change the operating frequency and may immediately transmit frames within the joint transmission period. Therefore, AP 1 301 may transmit an 'initial frame' (e.g., a trigger frame 330) to release the MediumSyncDelay timers of AP 2 303 and AP 3 305 at the starting point of the joint transmission period and restore medium synchronization. The initial frame includes not only the trigger frame but also all kinds of frames that AP 2 303 and AP 3 305 may decode and set the NAV correctly. Within the joint transmission frequency, i.e., the joint transmission period of the first link, AP 1 301 to AP 3 305 perform joint transmission. For example, AP 1 301 to AP 3 305 may perform a coordinated orthogonal frequency division multiple access (CO-OFDMA) operation or a coordinated spatial reuse (CO-SR) operation to transmit a frame 340 to STAs in the first link. At the end of the joint transmission period, AP 2 303 and AP 3 305 operate in the second link and the third link again.

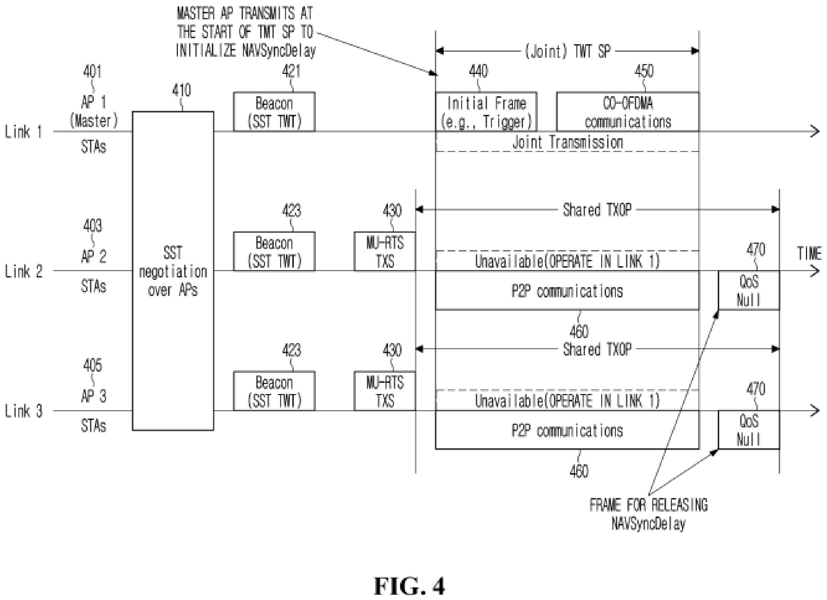

FIG. 4 illustrates a third embodiment of a multi-AP joint transmission method.

Referring to FIG. 4, AP 1 401 operates in a first link, AP 2 403 operates in a second link, and AP 3 405 operates in a third link. The link may refer to a specific operating frequency of a wireless LAN network. The operating frequencies of the first to third links may be different from each other or may be the same. When the operating frequencies of AP 1 401 to AP 3 405 are the same, an OBSS of AP 1 401 is BSSs of AP 2 403 and AP 3 405, an OBSS of AP 2 403 is BSSs of AP 1 401 and AP 3 405, and an OBSS of AP 3 405 is BSSs of AP 1 401 and AP 2 403. AP 1 401 to AP 3 405 may synchronize TSF (time synchronization function) with each other. That is, AP 1 401 to AP 3 405 have the same TSF value at the same time. The synchronization of TSF may be for synchronizing joint transmission schedules (e.g., R-TWT SP) of AP 1 401 to AP 3 405 with each other. In addition, when the operating frequencies of AP 1 401 to AP 3 405 are the same, synchronizing TSF may be for synchronizing joint transmission schedules (e.g., R-TWT SP) of OBSS with each other. AP 1 401 to AP 3 405 may perform schedule negotiation 410 for joint transmission. The schedule negotiation 410 for joint transmission may be a subchannel selective transmission (SST) target wake time (TWT) negotiation, or another type of TWT negotiation other than SST, or a transmission period negotiation. The SST TWT negotiation is a negotiation that establishes that communication will proceed on another channel during the TWT period. The SST TWT negotiation may be a negotiation that establishes, for example, that AP 2 403 operating in the second link and AP 3 405 operating in the third link operate in the first link within the TWT SP. As a result of the schedule negotiation 410 for joint transmission, AP 1 401 to AP 3 405 may establish a joint transmission period. The joint transmission period may be a TWT service period (SP). AP 1 401 may be a master AP that leads joint transmission schedule negotiation 410, and AP 1 401 to AP 3 405 perform communication at the operating frequency of AP 1 401 (i.e., the first link or the first channel) within the joint transmission period. That is, AP 2 403 and AP 3 405 must change the operating frequency (i.e., the link or the channel). Since AP 1 401 to AP 3 405 have synchronized the TSF, the starting points of the joint transmission periods of AP 1 401 to AP 3 405 may be the same, and AP 1 401 to AP 3 405 may know exactly when the joint transmission period starts.

AP 1 401 to AP 3 405 may transmit frames 421, 423 and 425 indicating a joint transmission period before the joint transmission period starts. The frames 421, 423 and 425 indicating the joint transmission period may be frames in various forms. For example, the frames 421, 423 and 425 indicating the joint transmission period may be beacon frames. The frames 421, 423 and 425 indicating the joint transmission period may include information indicating the joint transmission period (e.g., TWT information, TWT element) and information indicating a frequency (e.g., link ID, channel number, information that may indicate a specific operating frequency). The frames 423 and 425 indicating the joint transmission period transmitted by AP 2 403 and AP 3 405 may further include information (e.g., link ID, channel number, information capable of indicating a specific operating frequency) indicating an operating frequency to STAs that want to participate in the joint transmission period among STAs connected to AP 2 403 and AP 3 405. Before the joint transmission period starts, AP 2 403 and AP 3 405 may transmit a frame 430 indicating the performance of direct communication (e.g., operation of performing communication between STAs without transmitting data to the AP). The frame 430 indicating the performance of direct communication may indicate a period in which direct communication is performed (i.e., a direct communication period) and the STAs that may perform communication in the direct communication period. Alternatively, indicating the performance of direct communication may be included in the information indicating the joint transmission period. For example, the TWT element may indicate that the STA performs direct communication. In the present embodiment, indicating the performance of direct communication included in the frame 430 indicating the performance of direct communication or the information indicating the joint transmission period is referred to as a direct communication indication. The direct communication indication indicates that the AP performs direct communication within an unavailable period, and transmission to the AP may be prohibited during the corresponding period. The frames 421, 423 and 425 indicating the joint transmission period may include TWT information (e.g., information indicating R-TWT SP) that must terminate transmission (e.g., terminate TXOP (transmit opportunity)) before the joint transmission period (e.g., TWT SP, R-TWT SP, SP). That is, information indicating the joint transmission period and frequency may indicate the R-TWT SP. The period during which direct communication is performed within the period in which the AP is unavailable may be referred to as a direct communication period. A channel switching delay, which is the time it takes for the AP to change to a frequency that uses the joint transmission, may be included in the direct communication period. The channel switching delay may be applied to both a point in time when changing from an operating frequency to a frequency for joint transmission and a point in time when changing from a frequency for joint transmission to the current operating frequency. The channel switching delay may differ between APs, and the APs may perform multi-AP joint transmission from the same time after the channel switching delay. If the channel switching delays of APs are different, the length of the transmission prohibition period may be different. For example, if the channel switching delay of AP 2 403 is longer than that of AP 1 401, and the channel switching delay of AP 3 405 is longer than that of AP 2 403, then considering the channel switching delays of APs, the length of the transmission prohibition period of AP 3 405 may be the longest, the length of the transmission prohibition period of AP 1 401 may be the shortest, and the length of the transmission prohibition period of AP 2 403 may be longer than the length of the transmission prohibition period of AP 1 401 but shorter than the length of the transmission prohibition period of AP 3 405. The channel switching delay may be a predetermined value known to all STAs in the BSS. Alternatively, the AP may not include the channel switching delay in the direct communication period. STAs may receive frames 423 and 425 indicating the joint transmission period, and may calculate and recognize that the AP is unavailable starting from a point in time preceding the indicated time by the channel switching delay of the AP when receiving a direct communication indication included in the frame indicating the joint transmission period, and may not perform transmission to the AP from this time. STAs may terminate transmission (e.g., terminate TXOP) before the start of the transmission prohibition period upon receiving frames 423 and 425 indicating the joint transmission period. When the operating frequencies of AP 1 401 to AP 3 405 are the same, and STAs receive the frame 423 and 425 indicating the joint transmission period of the OBSS (i.e., AP 2 403 and AP 3 405 when the STA is connected to AP 1 401, AP 1 401 and AP 3 405 when the STA is connected to AP 2 403, and AP 1 401 and AP 2 403 when the STA is connected to AP 3 405), transmission may be terminated before the start of the direct communication period included in the frame 423 and 425 indicating the joint transmission period of the OBSS. Within the period in which the AP is unavailable, STAs perform direct communication, which is communication that does not go through the AP. The frame 430 indicating the performance of direct communication may be a MU-RTS (multi user-request to send) TXS (TXOP sharing) trigger frame, or various types of frames that may indicate a direct communication period. The frame 430 indicating the performance of direct communication may set the direct communication period to be the same as or longer than the joint transmission period. When the joint transmission period starts, AP 2 403 and AP 3 405 may operate at the frequency indicating the joint transmission, for example, in the first link, and AP 1 401 to AP 3 405 perform cooperative communication using the frequency at which the joint transmission is performed. Among the STAs connected to AP 2 403 and AP 3 405, STAs that want to participate in the joint transmission period may operate at the frequency at which the joint transmission is performed, for example, in the first link, when the joint transmission period starts. STAs wanting to participate in the joint transmission period may need to perform a negotiation procedure with AP 2 403 and AP 3 405, and the negotiation procedure may be a TWT negotiation (e.g., broadcast TWT negotiation, individual TWT negotiation) procedure. STAs that do not participate in the joint transmission period among the STAs connected to AP 2 403 and AP 3 405 perform direct communication by the frame indicating the performance of direct communication transmitted by AP 2 403 and AP 3 405. STAs that do not participate in the joint transmission period must select a new backoff counter (e.g., EDCA backoff counter) when the joint transmission period and direct communication period are terminated. STAs that do not participate in the joint transmission period may consider that there is no data (e.g., data packets, MSDUs, MPDUs) destined for AP 2 403 and AP 3 405 in the queue during the joint transmission period. STAs that do not participate in the joint transmission period do not transmit frames to AP 2 403 and AP 3 405 within the joint transmission period. Since AP 2 403 and AP 3 405 operate at an operating frequency (e.g., the first link) different from the original operating frequency within the joint transmission period and do not perform a reception operation (i.e., a reception operation including a channel sensing operation (e.g., a clear channel assessment (CCA))) at the different operating frequency before the joint transmission period, medium synchronization may be lost. In addition, if the joint transmission period is longer than a specific length, changing to the original operating frequency after the joint transmission period may result in loss of medium synchronization. Therefore, AP 2 403 and AP 3 405 must set a MediumSyncDelay timer, which is a timer for restoring medium synchronization, immediately after starting operation in the frequency for joint transmission (e.g., the first link) at the start time of the joint transmission period, and frame transmission may be restricted while the MediumSyncDelay timer is operating. Restricting frame transmission while the MediumSyncDelay timer is operating may mean that an RTS frame must be transmitted when the energy of the channel before transmitting a data frame is below a certain level, or a CCA (clear channel assessment) operation is performed without transmitting the frame. The MediumSyncDelay timer is released when the frame is normally received (e.g., the MPDU is normally received without error) and successfully decoded. AP 1 401 does not change the operating frequency and may immediately transmit the frame within the joint transmission period. Therefore, AP 1 401 may transmit an 'initial frame' (e.g., trigger frame, 440) to release the MediumSyncDelay timer of AP 2 403 and AP 3 405 at the starting point of the joint transmission period and to restore medium synchronization. The initial frame includes not only the trigger frame but also all kinds of frames that AP 2 403 and AP 3 405 may decode and set the NAV correctly. Within the joint transmission frequency, i.e., the joint transmission period of the first link, AP 1 401 to AP 3 405 perform joint transmission. For example, AP 1 401 to AP 3 405 may transmit the frame 450 to STAs in the first link by performing coordinated orthogonal frequency division multiple access (CO-OFDMA) operation or coordinated spatial reuse (CO-SR) operation. At the end of the joint transmission period, AP 2 403 and AP 3 405 operate in the second link and the third link again. Since AP 2 403 and AP 3 405 operated in the first link during the joint transmission period, AP 2 403 and AP 3 405 lose medium synchronization in the second link and the third link, which are the original operating frequencies, and must set the MediumSyncDelay timer, which is a timer for restoring medium synchronization. Due to the setting of the MediumSyncDelay timer, the frame transmission operations of AP 2 403 and AP 3 405 may be restricted. STAs capable of performing direct communication as indicated in the frames indicating direct communication transmitted by AP 2 403 and AP 3 405 simultaneously transmit frames 470 at a specific point in time (e.g., the point in time at which the joint transmission period ends, a predetermined point in time before the direct communication period ends) after the end of the joint transmission period. The frames 470 transmitted simultaneously may be frames for restoring medium synchronization. The frame 470 transmitted simultaneously by the STAs may be S-CTS (simultaneous clear to send) frames. When the frames 470 transmitted simultaneously by the STAs are S-CTS frames, the SCRAMBLER_INITIAL_VALUE included in the TXVECTOR parameter present in the PHY preamble of the S-CTS frame is equal to the SCRAMBLER_INITIAL_VALUE of the RXVECTOR parameter obtained from the PHY preamble of the received MU-RTS TXS trigger frame. Alternatively, the frame 430 indicating direct communication transmitted by AP 2 403 and AP 3 405 may indicate one of the STAs connected to AP 2 403 and AP 3 405 (e.g., indicating a specific AID, indicating a specific MAC address). Each STA indicated by AP 2 403 and AP 3 405 performs direct communication within the direct communication period, and after the joint transmission period ends, transmits a frame (e.g., a CTS frame, a QoS Null frame) to AP 2 403 and AP 3 405 to release the MediumSyncDelay timer of AP 2 403 and AP 3 405 and restore medium synchronization. The frame for restoring medium synchronization may be the simultaneously transmitted frame 470. With the frame transmission operation, AP 2 403 and AP 3 405 may restore medium synchronization and release the MediumSyncDelay timer. For frame transmission to release the MediumSyncDelay timer of AP 2 403 and AP 3 405, the end point of the direct communication period may be later than that of the joint transmission period. For example, the end point of a direct communication period may be at least a certain frame length later than the joint transmission period (e.g., a CTS frame, a QoS Null frame).

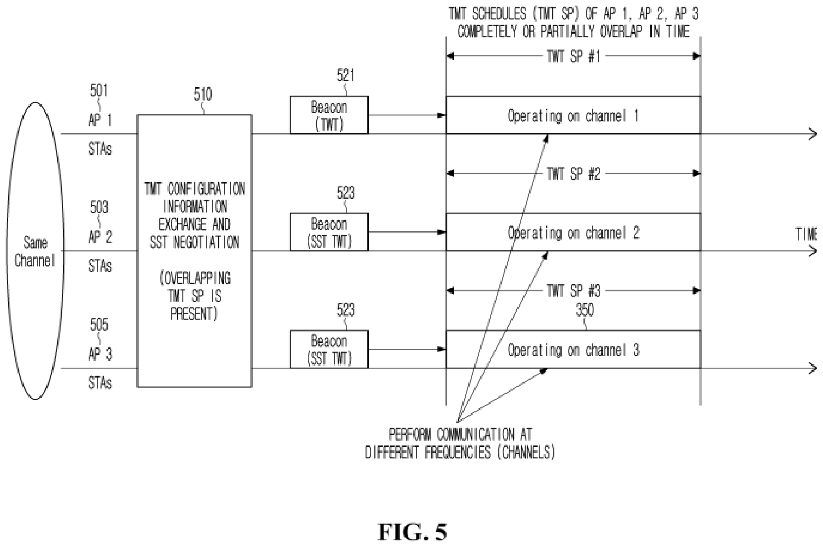

FIG. 5 illustrates a first embodiment of a multi-AP frequency change communication method.

Referring to FIG. 5, AP 1 501 to AP 3 505 operate at the same operating frequency. AP 1 501 to AP 3 505 may exchange TWT (e.g., individual TWT, broadcast TWT, restricted TWT) schedules set within each AP. As a result of exchange of the TWT schedules, AP 1 501 to AP 3 505 may know each other's TWT schedules (e.g., TWT SP). The TWT schedules of AP 1 501 to AP 3 505 may overlap in time. For example, TWT SP #1, TWT SP #2, and TWT SP #3, which are TWT schedules of AP 1 501 to AP 3 505, may completely overlap in time or partially overlap. AP 1 501 to AP 3 505 perform a negotiation 510 process to separate the frequencies at which the TWT schedule operates, and negotiate with each other the frequencies to be used in the overlapping TWT schedules. As a result of negotiation 510, AP 1 501 to AP 3 505 may use different frequencies in overlapping TWT schedules. For example, TWT SP #1, which is the TWT schedule of AP 1 501, may be negotiated to use Channel 1, TWT SP #2, which is the TWT schedule of AP 2 503, may be negotiated to use Channel 2, and TWT SP #3, which is the TWT schedule of AP 3 505, may be negotiated to use Channel 3. AP 1 501 to AP 3 505 may transmit frames (e.g., frames 521, 523 and 525 including SST TWT information, TWT information, and TWT elements) indicating frequencies to be used in the TWT schedules. The frames 521, 523 and 525 indicating frequencies to be used in the TWT schedules may change an existing TWT schedule or set a new TWT schedule. The communication frequency of the TWT schedule indicated by the frames 521, 523 and 525 indicating the frequency to be used in the TWT schedules transmitted by AP 1 501 to AP 3 505 may indicate the frequency negotiated by AP 1 501 to AP 3 505. TWT SP #1 of AP 1 501 is performed on Channel 1, TWT SP #2 of AP 2 503 is performed on Channel 2, and TWT SP #3 of AP 3 505 is performed on Channel 3, and the TWT schedules of AP 1 501 to AP 3 505 are separated in frequency so that TWT operations may be performed without interference with each other.

Hereinafter, the negotiation and communication procedures for joint transmission will be described. The negotiation and communication procedures for joint transmission may be performed by a plurality of APs and STAs connected to each AP. The plurality of APs may be APs that communicate with the STA using the same frequency. Alternatively, the plurality of APs may be APs that communicate with the STA using different frequencies. Joint transmission may refer to an operation in which a plurality of APs transmit data or frames using the same frequency or link.

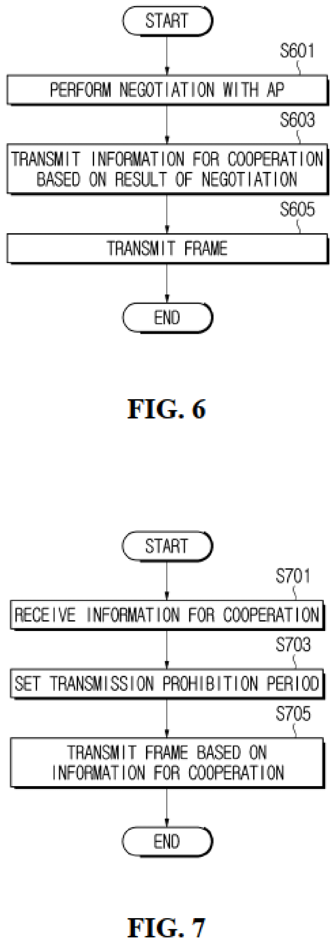

FIG. 6 is a flowchart of a negotiation and communication procedure for joint transmission according to an embodiment of the present disclosure. The procedure illustrated in FIG. 6 is performed by one of multiple APs. The AP of the present disclosure may be a master AP. The master AP (e.g., AP 1 201 of FIG. 2 ) may be the AP that takes the lead in negotiations. Alternatively, the AP of the present disclosure may be an AP (e.g., AP 2 203 of FIG. 2) other than the master AP.

Referring to FIG. 6, in step S601, the AP performs negotiation with at least one other AP (e.g., schedule negotiation 210 for joint transmission in FIG. 2). The AP may negotiate with other APs for joint transmission. The negotiation may be performed to schedule a joint transmission period. Here, the joint transmission period refers to a time period during which joint transmission is performed. For example, the negotiation may include SST TWT negotiation, non-SST TWT negotiation, or transmission period negotiation. During the negotiation process, the AP may synchronize the TSF to synchronize the joint transmission schedule or joint transmission period.

In step S603, the AP transmits information for cooperation based on the result of negotiation. The AP may transmit the information for cooperation to the STA. The information for cooperation may be generated based on the result of negotiation. The information for cooperation may be carried by a beacon frame (e.g., frame 221 indicating a joint transmission period in FIG. 2). The information for cooperation includes information about the joint transmission period, information about the frequency, a transmission prohibition indication, or information about direct communication. Alternatively, the information about direct communication may be carried by a frame different from the information for cooperation (e.g., frame 430 indicating the performance of direct communication in FIG. 4). For example, the information about the joint transmission period includes at least one of TWT information, a channel switching delay, or a TWT element. The information about the frequency includes, for example, at least one of a link ID, a channel number, or frequency information. The transmission prohibition indication may include at least one of information about the transmission prohibition period or information about the STA whose transmission is prohibited. The information about direct communication includes at least one of information about whether direct communication is performed, a period in which direct communication is performed, or the STA participating in direct communication.

In step S605, the AP performs joint transmission. Joint transmission may refer to an operation of transmitting a frame (e.g., frame 240 of FIG. 2) to STAs. Joint transmission may include an operation of transmitting a frame based on a CO-OFDMA operation or a CO-SR operation. To perform joint transmission, the AP changes the operating frequency or operating link based on information for cooperation. The master AP may transmit an initial frame (e.g., initial frame 230 of FIG. 2) to another AP to perform joint transmission. Joint transmission may be performed within a joint transmission period. Within the joint transmission period, the AP may transmit a frame based on information for cooperation. The frame may be transmitted to an STA participating in joint transmission. The STA participating in joint transmission may be an STA that has performed a negotiation procedure with the AP. The negotiation procedure between the AP and the STA may be performed by an AP other than the master AP. The negotiation procedure between the AP and the STA may be performed before the joint transmission period.

FIG. 7 is a flowchart of a communication procedure for joint transmission according to an embodiment of the present disclosure. FIG. 7 illustrates a procedure performed by an STA. The STA of FIG. 7 may be an STA connected to an AP. For example, the STA of the present disclosure may be an STA connected to a master AP (e.g., AP 1 201 of FIG. 2 ) or an AP other than the master AP (e.g., AP 2 203 of FIG. 2).

Referring to FIG. 7, in step S701, the STA receives information for cooperation. The information for cooperation may be information generated based on negotiation between APs (e.g., schedule negotiation 210 for joint transmission in FIG. 2). The information for cooperation includes information about a joint transmission period, information about a frequency, a transmission prohibition indication, or information about direct communication. At least some of the information for cooperation may be carried by at least one frame. For example, the information for cooperation may be carried by a beacon frame (e.g., frame 221 indicating a joint transmission period in FIG. 2). As another example, the information for cooperation may be carried by a beacon frame and an MU-RTS frame (e.g., frame 430 indicating direct communication in FIG. 4). For example, among the information for cooperation, information about direct communication may be carried by the MU-RTS frame, and the remaining information may be carried by the beacon frame. For example, the information about the joint transmission period includes at least one of TWT information, a channel switching delay, or a TWT element. The information about a frequency includes, for example, at least one of a link ID, a channel number, or frequency information. The transmission prohibition indication may include at least one of information about a transmission prohibition period or an STA whose transmission is prohibited. The information about direct communication includes at least one of information about whether direct communication is performed, a period in which direct communication is performed, or an STA participating in direct communication.

In step S703, the STA may set a transmission prohibition period (e.g., NAV 251 in FIG. 3) based on the information for cooperation. The transmission prohibition period refers to a period in which frame transmission is prohibited to the AP. For example, the transmission prohibition period may include a NAV or a silence period. The transmission prohibition period may be set based on a transmission prohibition indication included in the information for cooperation. Alternatively, the STA may set the transmission prohibition period based on information about the joint transmission period and a channel switching delay. The STA may terminate frame transmission before the transmission prohibition period. For example, the STA may terminate frame transmission by terminating TXOP before the transmission prohibition period. If the information for cooperation includes information about direct communication, the STA may additionally set a direct communication period (e.g., the direct communication 350 period in FIG. 3). The direct communication period is a period in which the STA may transmit frames without going through the AP. When the direct communication period is set, the transmission prohibition period may not be set. In other words, the direct communication period may be set instead of the transmission prohibition period.

In step S705, the STA may transmit a frame based on the information for cooperation. When the STA has established the direct communication period, the STA may transmit a frame to another STA. The STA may transmit a frame to another STA within the direct communication period. If the STA has not established the direct communication period, the STA may transmit a frame after the joint transmission period ends. After the joint transmission period ends, the STA which has established the direct communication period and the STA which has not established the direct communication period may transmit a frame (e.g., the frame 470 transmitted simultaneously by the STAs in FIG. 4) to release a timer for restoring medium synchronization of the AP. For example, the STA may transmit an S-CTS frame or a QoS Null frame to the connected AP.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

### Industrial Applicability

The present disclosure may be applied to devices and recording media in a wireless LAN system.

## Claims

1. A method for operating an access point (AP) in a wireless LAN system, comprising:
negotiating with at least one other AP for joint transmission;
transmitting information for the joint transmission based on a result of negotiation; and
transmitting a frame based on the result of negotiation,
wherein the result of negotiation includes a frequency for the joint transmission, and
wherein the frame is transmitted using the frequency for the joint transmission.

2. The method of claim 1, wherein the information for the joint transmission includes at least one of information about a period of the joint transmission, information about the frequency for the joint transmission, information about a transmission prohibition period, or information about a direct communication indication.

3. The method of claim 1,
wherein the transmitting the frame further comprises changing an operating frequency to the frequency for the joint transmission, and
wherein the frame is transmitted within the period of the joint transmission set by the negotiation.

4. The method of claim 3, wherein the period of the joint transmission includes a TWT SP (service period), a R-TWT (restricted TWT) SP or an SP.

5. The method of claim 1, further comprising synchronizing a time synchronization function (TSF) for the joint transmission.

6. The method of claim 1, wherein the frame is transmitted based on CO-OFDMA (coordinated orthogonal frequency division multiple access) or CO-SR (coordinated spatial reuse).

7. The method of claim 1, wherein the frame includes an initial frame for restoring medium synchronization of the other AP.

8. The method of claim 1, further comprising performing negotiation with a station (STA) participating in the joint transmission, for the joint transmission.

9. The method of claim 1, wherein the negotiation includes at least one of SST (subchannel selective transmission) TWT (target wake time) negotiation, TWT negotiation other than the SST, or transmission period negotiation.

10. A method for operating a station (STA) in a wireless LAN system, comprising:
receiving information for joint transmission from a connected AP; and
performing at least one of a transmission prohibition operation, a frame reception operation, or a direct communication operation during a period of the joint transmission based on the information for the joint transmission,
wherein the information for the joint transmission includes at least one of information about the period of the joint transmission or information about a frequency for the joint transmission.

11. The method of claim 10, wherein the transmission prohibition operation includes an operation of setting a transmission prohibition period including the period of the joint transmission and an operation of ignoring a frame scheduled to be transmitted to the connected AP within the transmission prohibition period.

12. The method of claim 10, wherein the frame reception operation includes an operation of receiving a frame using the frequency for the joint transmission within the period of the joint transmission.

13. The method of claim 10, wherein the direct communication operation includes an operation of communicating with another STA within the period of the joint transmission.

14. The method of claim 10, wherein the information for the joint transmission includes at least one of information about the period of the joint transmission, information about the frequency for the joint transmission, information about a transmission prohibition period, or information about a direct communication indication.

15. The method of claim 10, further comprising transmitting a frame for medium synchronization of the connected AP to the connected AP, after the period of the joint transmission ends.

16. The method of claim 10, further comprising negotiating with the connected AP to receive the frame.

17. An access point (AP) in a wireless LAN system, comprising:
a transceiver; and
a processor connected to the transceiver,
wherein the processor is configured to:
negotiate with at least one other AP for joint transmission;
transmit information for the joint transmission based on a result of negotiation; and
transmit a frame based on the result of negotiation,
wherein the result of negotiation includes a frequency for the joint transmission, and
wherein the frame is transmitted using the frequency for the joint transmission.

18. A station (STA) in a wireless LAN system, comprising:
a transceiver; and
a processor connected to the transceiver,
wherein the processor is configured to:
receive information for joint transmission from a connected AP; and
perform at least one of a transmission prohibition operation, a frame reception operation, or a direct communication operation during a period of the joint transmission based on the information for the joint transmission,
wherein the information for the joint transmission includes at least one of information about the period of the joint transmission or information about a frequency for the joint transmission.
